# EUROPÄISCHE PATENTANMELDUNG

(11) **EP 1 584 274 A1**
(43) Veröffentlichungstag der Anmeldung: **12.10.2005**
(21) Anmeldenummer: 05007520.9
(22) Anmeldetag: 06.04.2005
(51) Int. Cl.: A47J 39/02, A47J 39/00

(54) **Vorrichtung zum Erwärmen von Tellern**

(30) Priorität: 06.04.2004 DE 202004005426 U
(71) Anmelder: HUPFER Metallwerke GmbH & Co. KG, 48653 Coesfeld (DE)
(72) Erfinder: Schumacher, Helmut, 48653 Coesfeld (DE)
(74) Vertreter: Habbel, Ludwig (Lutz)

(57) **Zusammenfassung**

Die Erfindung bezieht sich auf eine Vorrichtung (1) zum Erwärmen von Tellern, mit einem Gehäuse (2), und mit wenigstens einem Tellerschacht (8) zur Aufnahme von Tellern, und mit einem Heißluftgebläse (38), welches Heißluft im Gehäuse (2) verteilt, um die Teller zu beheizen, wobei die Heißluft direkt auf den Tellerschacht (8) gerichtet ist.

## Beschreibung

Die Erfindung betrifft eine Vorrichtung zum Erwärmen von Tellern, mit einem Gehäuse, und mit wenigstens einem Tellerschacht zur Aufnahme von Tellern, und mit einem Heißluftgebläse, welches Heißluft im Gehäuse verteilt, um die Teller zu beheizen.

### Stand der Technik:

Derartige Vorrichtungen sind aus der Praxis bekannt. Sie dienen zum Erwärmen von leeren Tellern, bevor warme Speisen auf diese Teller gegeben werden, so dass durch die vorgewärmten Teller die Speisen länger warm gehalten werden. Weiterhin dienen sie zum Erwärmen von sogenannten Warmhaltetellern, auf welche der eigentliche Porzellanteller gestellt werden kann. Diese Warmhalteteller werden im Englischen auch "base" bezeichnet. Sie bestehen üblicherweise aus Metall mit einem wärmespeichernden Kern, beispielsweise aus Wachs. Unter dem Begriff "Teller" wird in der vorliegenden Anmeldung sowohl das eigentliche Geschirr verstanden, beispielsweise aus Porzellan, als auch die Warmhalteteller.

Die bekannten Einrichtungen gehen davon aus, dass eine möglichst rasche Erwärmung der Teller dadurch bewirkt werden kann, dass eine möglichst gleichmäßige Luftverteilung innerhalb des Gehäuses vorgesehen wird. Hierzu wird die Luft mittels des Heißluftgebläses in die Hohlräume geblasen, welche sich zwischen dem Tellerstapel und der Gehäusewandung ergibt. Auf diese Weise kann sich die Luft optimal innerhalb dieser Hohlräume verteilen und gleichmäßig auf die Teller einwirken.

Bei den bekannten Geräten ist eine bestimmte Zeit erforderlich, um einen Tellerstapel auf eine vorgegebene Temperatur zu erhitzen. Eine in der Praxis häufig gewünschte Verkürzung der Aufheizzeit kann nur durch Installation zusätzlicher Heizelemente oder durch eine stärkere Aufheizung dieser Heizelemente erfolgen.

Dabei ist nachteilig, dass bei längerer Aufheizdauer die von der Vorrichtung an dem umgebenden Raum abgegebene Wärme zeitbedingt zunimmt. Das Gleiche gilt für die Beheizung der Teller mit einer höheren Temperatur der Heißluft: Auch bei einer derartigen Temperaturerhöhung wird die in den umgebenden Raum abgegebene Wärmemenge während der Aufheizphase größer. Insbesondere wenn in gewerblichen Küchenbetrieben eine Vielzahl von derartigen Vorrichtungen verwendet wird, die im Englischen beispielsweise "plate warmer" oder "base heater" genannt werden, so ergibt sich eine unerwünscht hohe Aufheizung der Raumtemperatur, die für das Arbeitspersonal nachteilig ist bzw. einen erhöhten Klimatisierungsbedarf dieses Raumes verursacht.

### Aufgabe der Erfindung:

Der Erfindung liegt die Aufgabe zugrunde, eine gattungsgemäße Vorrichtung dahingehend zu verbessern, dass diese mit einer verbesserten Effektivität die Erwärmung der Teller ermöglicht.

Insbesondere ist es eine Aufgabe der Erfindung, eine Vorrichtung zum Erwärmen von Tellern zu schaffen, die bei einer vorgegebenen elektrischen Anschlussleistung die Erwärmung der Teller in kürzerer Zeit ermöglicht und die an die Umgebung abgegebene Wärmemenge reduziert.

### Detaillierte Beschreibung der Erfindung:

Diese der Erfindung zugrundeliegende Aufgabe wird durch eine Vorrichtung mit den Merkmalen des Anspruchs 1 gelöst.

Die Erfindung schlägt mit anderen Worten überraschend und in Abkehr von den bisherigen theoretischen Erkenntnissen vor, die Heißluft nicht in dem Hohlraum zwischen dem Tellerstapel und der Gehäusewandung zu verteilen, sondern vielmehr ganz im Gegenteil die Teller direkt mit der Heißluft zu beaufschlagen.

Die im bekannten Stand der Technik übliche Ausgestaltung der Tallerwarmer geht darauf zurück, daß derartige Tellerwärmer in vergleichsweise geringen Stückzahlen gefertigt werden. In erheblich größeren Stückzahlen werden hingegen Geräte gefertigt, in denen Speisen warm gehalten werden sollen, beispielsweise sogenannte Tablett-Transportwagen, bei denen mit Speisen bestückte Tabletts bis zu ihrer Austeilung auf der gewünschten hohen Temperatur gehalten werden sollen. Bei derartigen Einrichtungen ist die gleichmäßige Verteilung der Warmluft vorteilhaft und deshalb werden bei derartigen Geräten die Warmluftströme stets indirekt auf die Tabletts bzw. auf die warm zu haltenden Speisen gerichtet, indem zunächst die Gehäusewand angeblasen wird und durch die Reflektion des Luftstromes dafür sorgt, daß der Warmluftstrom möglichst gleichmäßig im Inneren des Gehäuses derartiger Tablett-Transportwagen verteilt wird.

Bei der Konstruktion von Tellerwärmern ist im Stand der Technik von diesem vorbekannten Konstruktionsprinzip nicht abgewichen worden, sondern dieses Prinzip ist naheliegenderweise übernommen worden, weil mit diesem Prinzip der indirekten Beheizung ein in der Fachwelt gut bekannter Vorteil verbunden war, nämlich die gleichmäßige Temperaturverteilung.

Bei der erfindungsgemäß vorgeschlagenen direkten Beheizung der Teller mit Warmluft hat sich in überraschender Weise herausgestellt, daß hierdurch eine besonders effektive Beheizung der Teller erfolgen kann: Während bei der Erzeugung turbulenter Luftströme im Hohlraum zwischen dem Tellerstapel und der Gehäusewandung thermodynamische Kurzschlussströme erzeugt wurden, die eine Kreislaufführung der Heißluft darstellten, also keine Energieabgabe an den Tellerstapel bewirkten, wird Neuerungsgemäß die eingesetzte Heißluft sehr effektiv an die Teller abgegeben, da die Heißluft direkt auf den Tellerstapel gerichtet ist. Vergleichende Messungen haben ergeben, dass bei gleicher elektrischer Anschlussleistung, also gleicher Heizleistung der Heizung sowie gleicher Gebläseleistung, die Aufheizdauer der Teller erheblich reduziert werden konnte.

Vorteilhaft kann vorgesehen sein, das Gebläse unmittelbar auf die Teller auszurichten, so dass das Gebläse die Luft direkt auf die Teller bläst. Insbesondere bei Neukonstruktionen der Teller-Wärmvorrichtung kann so eine Vorrichtung mit vergleichsweise kleinen baulichen Abmessungen erzielt werden, so dass beispielsweise in einer großen Küche mehrere derartiger Vorrichtungen aufgestellt werden können als bislang. Zudem wird durch kleinere Gehäuseabmessungen Rohstoff eingespart und die Vorrichtung wird leichter, so dass sie vom Personal leichter zu handhaben ist, insbesondere wenn diese Vorrichtung verfahrbar ausgestaltet ist.

Alternativ kann vorteilhaft vorgesehen sein, ein Luftleitblech vorzusehen, welches den Luftstrom vom Gebläse auf die Teller umlenkt. Ein derartiges Luftleitblech kann insbesondere vorteilhaft sein, wenn eine bestehende Konstruktion beibehalten werden soll, um die Investitionen für eine Neukonstruktion der Vorrichtung zu sparen und es kann vorteilhaft zum Nachrüsten verwendet werden, um bestehende Vorrichtungen, die sich ggf. bereits im betrieblichen Einsatz befinden, nachzurüsten und auf diese Weise ohne elektrische Änderungen oder grundsätzliche Änderungen der Konstruktion derartiger Vorrichtungen eine schnellere Aufheizung der Teller und eine geringere Wärmeabgabe an die Umgebung auch nachträglich zu ermöglichen. Die Anordnung eines Luftleitbleches ermöglicht im Sinne des vorliegenden Vorschlags ebenfalls eine "direkte" Beheizung der Teller, obwohl der Luftstrom umgelenkt wird. Das Luftleitblech stellt vielmehr das Bauteil einer Wärmeeinheit bzw. eines Wärmeeinsatzes dar, der im Gehäuse des Tellerwärmers angeordnet ist und aus welchem Einsatz heraus die Luft direkt auf den Tellerstapel gerichtet ist und nicht etwa auf die Gehäusewandungen des Tellerwärmers, die erst dann nach einer Strömungsumkehr die Warmluft auf den Tellerstapel gelangen lassen. Als "direkte Beheizung" im Sinne des vorliegenden Vorschlages ist daher eine Beheizung zu verstehen, bei der aus der - insgesamt aus mehreren Bauteilen bestehenden - Heizeinrichtung der austretende Luftstrom direkt auf die Teller gerichtet ist.

Das Luftleitblech kann insbesondere auch dazu dienen, die erhitzte Luft vom Boden des Gehäuses femzuhalten und stattdessen die erhitzte Luft oberhalb des Bodens auf den Tellerschacht und die darin gestapelten Teller zu lenken. Hierdurch wird der Bodenbereich des Gehäuses weniger stark aufgeheizt, so dass weniger Wärmeverluste an die Umgebung abgegeben werden und sich die Effektivität der Beheizung im Innenraum des Gehäuses verbessert. Zudem ergibt sich die Möglichkeit, Isolationsmaterial am Boden einzusparen, was wiederum zu einer geringeren Höhe der äußeren Gehäusewand führt und somit Gehäusematerial einspart. Abgesehen von den Material- und Kosteneinsparungen wird das Gewicht der Vorrichtung verringert, so dass es für das Personal leichter handhabbar ist, z. B. wenn die Vorrichtung mobil verfahrbar ist.

Bei Verwendung eines Luftleitbleches kann dieses vorteilhaft so geformt sein, dass es den Luftstrom kurvig lenkt, also ohne scharfkantige Übergänge. Als Kurve kann dabei ein gebogener Verlauf des Luftleitbleches bezeichnet werden oder auch ein polygonartiger Verlauf, so dass in jedem Fall die Richtungsumkehr des Luftstroms sanft bzw. in einer Vielzahl sehr kleiner Stufen erfolgt. Auf diese Weise werden unerwünschte Turbulenzen des Luftstroms vermieden und die Intensität des Luftstroms, insbesondere seine Strömungsgeschwindigkeit, so gering wie möglich reduziert, so dass der Luftstrom mit einer möglichst hohen Geschwindigkeit auf die Teller auftrifft. Die hohe Geschwindigkeit des Luftstroms ist für die Beheizung der Teller ebenso wichtig, wie die Temperatur des Luftstroms, da beide Faktoren für den Wärmeübergang entscheidend sind, mit welchem die Wärmeenergie der Luft an die Teller übertragen wird. Eine möglichst effektive Beibehaltung der vom Gebläse erzeugten Luftgeschwindigkeit ermöglicht daher eine effektive Beheizung der Teller auch dann, wenn grundsätzlich ein Gebläse mit vergleichsweise langsamer Luftgeschwindigkeit verwendet wird, welches im Vergleich zu Gebläsen mit höherer Luftgeschwindigkeit erheblich wirtschaftlicher arbeitet und weniger elektrische Energie verbraucht.

Dort wo das Luftleitblech endet, also wo es aufhört, dem Luftstrom anzuliegen und ihn zu führen, kann es vorteilhaft eine scharfe Abrisskante aufweisen, beispielsweise indem es endet, also abgeschnitten ist, oder indem es in einem scharfen Winkel, beispielsweise 90° oder mehr, vom Luftstrom weg abgewinkelt ist. Diese als Abrisskante bezeichnete Gestaltung des Endes des Luftleitbleches ist günstig für Luftströme mit vergleichsweise geringer Geschwindigkeit, da derartige Luftströme ansonsten bestrebt sind, dem Luftleitblech anzuliegen. Sie würden daher von ihrer ursprünglich beabsichtigten, auf den Tellerstapel ausgerichteten Richtung abgelenkt, so dass die Effektivität des Luftstroms und damit der Heizwirkung beeinträchtigt würde. Die scharfe Abrisskante begünstigt daher die Verwendung eines Gebläses mit vergleichsweise geringer Leistung bzw. vergleichsweise geringer Luftgeschwindigkeit, dessen Vorteile bereits weiter oben näher erläutert wurden.

Vorteilhaft kann das Gebläse als Radialgebläse ausgestaltet sein. Derartige Gebläse sind aus der Praxis, insbesondere von den gattungsgemäßen Vorrichtungen her bekannt. Sie stellen daher preisgünstige handelsübliche und in der Praxis bewährte Bauteile dar. Durch ihre flachen Einbaumaße ermöglichen sie eine problemlose Anordnung in den Neuerungsgemäßen Vorrichtungen. Derartige Radialgebläse fördern den Luftstrom radial zu ihrer Drehachse. Dabei wird überlicherweise der Luftstrom in axialer Richtung angesaugt und anschließend um 90° nach außen umgelenkt, so dass der angesaugte Luftstrom das Gebläse radial nach außen verlässt. Bei den Radialgebläsen ist vorteilhaft, daß sich die Gebläseflügel in der Zone hoher Temperatur befinden, während der Motor selbst außerhalb dieser Warmzone vorgesehen ist, so daß einerseits vergleichsweise preisgünstige Gebläsemotoren verwendet werden können und andererseits die Lebensdauer des Gebläsemotors dadurch besonders hoch ist, daß dieser Motor nicht unzulässigen, hohen Temperaturen ausgesetzt wird, da er nicht der von der Heizeinrichtung erwärmten Luft ausgesetzt wird.

Alternativ kann ein Axialgebläse vorgesehen sein, bei welchem der Luftstrom in axialer Richtung gefördert wird, wie dies beispielsweise von Propellern bekannt ist. Derartige Axiallüfter ermöglichen beispielsweise eine Anordnung in den Ecken eines viereckigen Gehäuses, wo der Abstand der Gehäusewand zum Tellerstapel am größten ist und können unmittelbar auf den Tellerstapel gerichtet werden.

Dadurch, dass die Heißluft außermittig auf den Tellerschacht gerichtet wird, kann eine bevorzugte Strömungsrichtung bewirkt werden, in welcher der Luftstrom um die in diesem Tellerschacht befindlichen Teller geführt wird. So werden Turbulenzen und thermodynamische Kurzschlüsse weitgehend vermieden. Die Gebläseleistung wird unterstützt, indem die Luft in einem Kreislauf geführt werden kann: sie trifft auf die im Tellerschacht gestapelten Teller direkt auf und gibt einen vorteilhaft großen Teil ihrer Wärmemenge an die Teller ab. Durch den außermittigen Aufprall wird die Luft seitlich abgelenkt, so dass sie zwischen dem gestapelten Tellern und der Gehäusewandung um die Teller herum geführt wird. So ergibt sich eine Ansaugseite für das Gebläse, wo es die abgekühlte Luft ansaugen kann, die anschließend erwärmt und erneut auf die Teller geblasen wird. Durch die Kreislaufführung wird die Gebläseleistung optimal genutzt, und es wird sichergestellt, dass die Teller großflächig mit erwärmter Luft in Kontakt kommen.

Durch die Möglichkeit, die Teller in dem Tellerschacht direkt anzublasen, können mehrere Heißluftgebläse vorgesehen sein. Dies ermöglicht die Verwendung preisgünstiger, kleiner und mit vergleichsweise wenig Energiebedarf arbeitender Heizungs- oder Gebläseeinheiten: so können beispielsweise die Räume in den Ecken des Gehäuses problemlos genutzt werden. Dabei kann insbesondere vorgesehen sein, dass nicht stets eine Kombination von Heizung und Gebläse installiert wird, sondern es kann ein Zusatzgebläse vorgesehen sein, welches die zuvor erwärmte Luft, die bereits auf den Tellerstapel getroffen ist und sich teilweise abgekühlt hat, erneut direkt auf den Tellerschacht mit den darin gestapelten Tellern lenkt und so einen intensiveren Wärmeübergang von der Luft auf die Teller erzwingt als wenn die Luft lediglich um die Teller herum geführt wird.

Ausführungsbeispiele der Erfindung werden anhand der Zeichnungen näher erläutert. Dabei zeigt
- Fig. 1: eine perspektivische Ansicht auf eine Vorrichtung zum Erwärmen von Tellern,
- Fig. 2: die Vorrichtung von Fig. 1 aus einer anderen Perspektive,
- Fig. 3: die Vorrichtung der Fig. 1 und 2 mit einer Ansicht in einen Tellerschacht hinein,
- Fig. 4: eine Ansicht in den Tellerschacht aus einer anderen Blickrichtung als in Fig. 3,
- Fig. 5: eine Ansicht ähnlich Fig. 4, jedoch in einer anderen Blickrichtung,
- Fig. 6: ein Seitenwandmodul für die Vorrichtung der Fig. 1 bis 5, mit einem Luftleitblech für die Heißluft,
- Fig. 7: eine Ausschnitts-Darstellung des Luftleitbleches von Fig. 6 in gegenüber Fig. 6 größerem Maßstab,
- Fig. 8: ein Radial-Heißluftgebläse, welches in der Vorrichtung der Fig. 1 bis 7 verwendbar ist,
- Fig. 9: das Gebläse von Fig. 8 in einer anderen Perspektive,
- Fig. 10: eine rein schematische Ansicht als horizontaler Schnitt durch das Innere der Vorrichtung,
- Fig. 11: eine Ansicht ähnlich Fig. 10 durch das Innere eines zweiten Ausführungsbeispiels der Erfindung, und
- Fig. 12: eine rein schematische, teilweise weggebrochene Darstellung des Inneren eines dritten Ausführungsbeispiels der Erfindung.

In den Zeichnungen ist mit 1 allgemein eine Vorrichtung zum Erwärmen von Tellern bezeichnet, die ein Gehäuse 2 aufweist, untere Stoßleisten 3, einen Führungsbügel 4 sowie Laufräder 7, so dass die gesamte Vorrichtung 1 mobil ist und mittels des Führungsbügels 4 gehandhabt und verschoben werden kann. Ein Anschlusskabel 5 ist für die elektrische Energieversorgung vorgesehen, und mittels eines Ein- und Ausschalters 6 kann ein später noch näher erläutertes Heizgebläse zur Beheizung des Innenraums ein- oder ausgeschaltet werden.

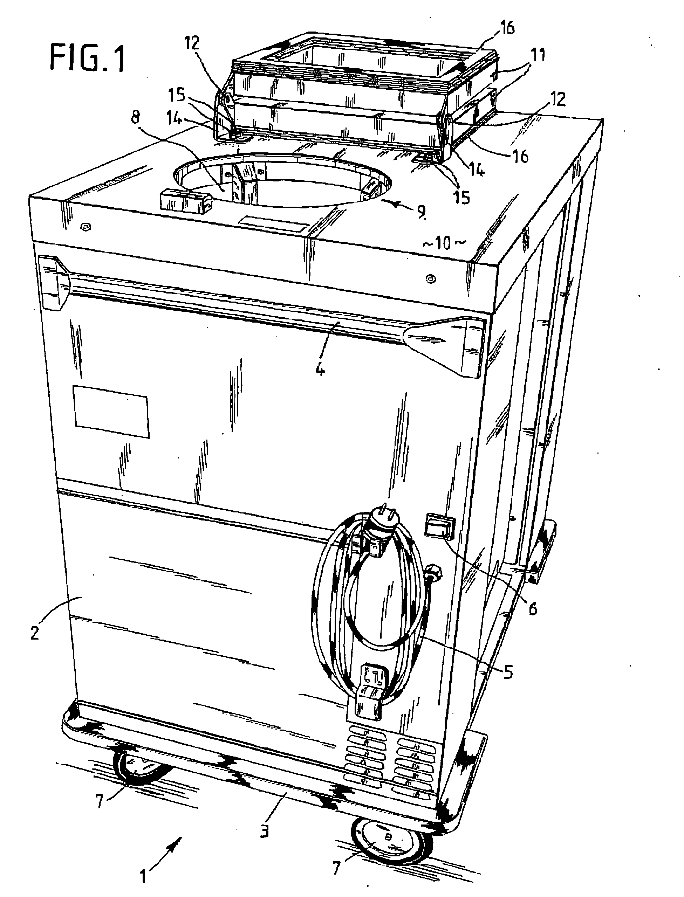

Die Vorrichtung 1 weist insgesamt zwei Tellerschächte 8 auf, wobei in Fig. 1 lediglich einer dieser beiden Tellerschächte 8 aufgrund einer Öffnung 9 im Deckel 10 der Vorrichtung 1 erkennbar ist. Diese Öffnung 9 stellt die Mündung des Tellerschachtes 8 im Deckel 10 dar und ermöglicht den Zugang zum Tellerschacht 8, um Teller in den Tellerschacht 8 zu geben oder aus dem Tellerschacht 8 zu entnehmen. Die Öffnung 9 kann durch eine Deckelklappe 11 verdeckt werden, wobei diese Deckelklappe 11 zwischen zwei Scharnierpunkten 12 schwenkbeweglich gelagert ist.

Diese Schamierpunkte 12 sind an Laschen 14 vorgesehen, wobei diese Laschen 14 durch Schrauben 15 mit dem Deckel 10 verschraubt sind. Die aufgeklappte, die Öffnung 9 freigebende Deckelklappe 11 weist an ihrer Unterseite, die im aufgeklappten Zustand nach oben weist, eine umlaufende Dichtung 16 auf und ist in Fig. 1 als obere Deckelklappe 11 dargestellt, über einer zweiten, unteren Deckelklappe 11. Diese zweite Deckelklappe 11 befindet sich in ihrer Schließstellung, liegt mit ihrer Dichtung 16 auf dem Deckel 10 auf und verdeckt eine zweite - in Fig. 1 nicht erkennbare - Öffnung, die im Deckel 10 vorgesehen ist und an welche sich nach unten der zweite erwähnte Tellerschacht anschließt.

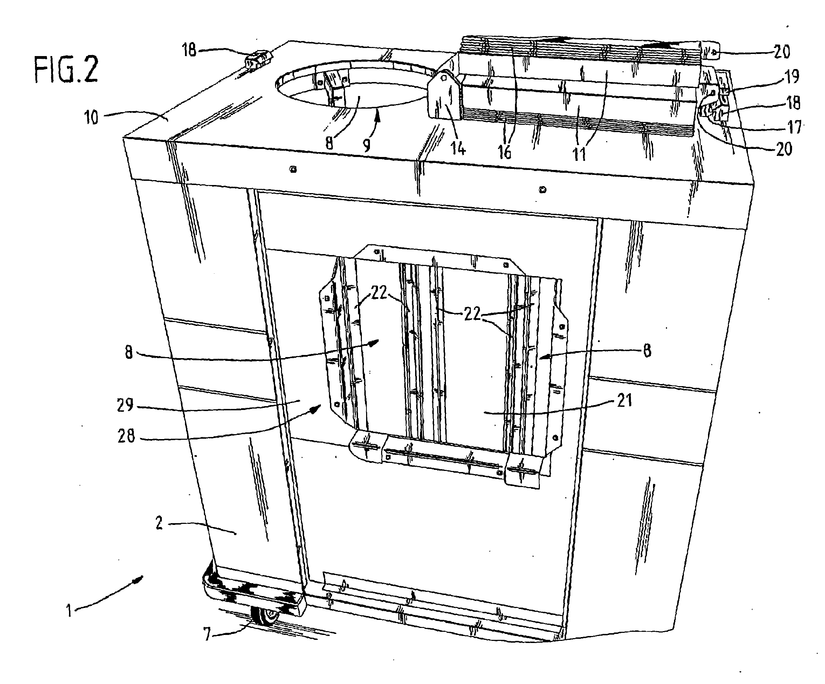

Aus Fig. 2 ist ersichtlich, dass die Deckelklappen 11 an ihren den Scharnierpunkten 12 und den Laschen 14 gegenüberliegenden Enden jeweils einen Verriegelungshaken 17 aufweisen, mit welchem sie hinter einem Riegelklotz 18 verhakt werden können. Auf diese Weise können die Deckelklappen 11 zuverlässig in ihrer Schließstellung gehalten werden, unter Kompression der Dichtung 16, so dass zuverlässig das Entweichen von Heißluft aus der Vorrichtung 1 vermieden werden kann, z. B. während des Aufheizbetriebes.

Der Rasthaken 17 kann mittels eines Handhebels 19 betätigt werden und insbesondere um eine Achse 20 verschwenkt werden, so dass durch diese Schwenkbewegung die Verriegelung zwischen Verriegelungshaken 17 und Riegelklotz 18 gelöst werden kann und die geschlossene Deckelklappe 11 anschließend geöffnet werden kann.

Fig. 2 zeigt weiterhin, dass auf einer der beiden Längsseiten der Vorrichtung 1 ein äußeres Wandelement des Gehäuses 2 entfernt ist, wobei eine Wandöffnung 21 einen Blick in den Innenraum der Vorrichtung 1 freigibt. Dort sind mehrere vertikale Führungsstangen 22 erkennbar, die jeweils einen Tellerschacht 8 begrenzen und zur Führung eines Tellerstapels dienen.

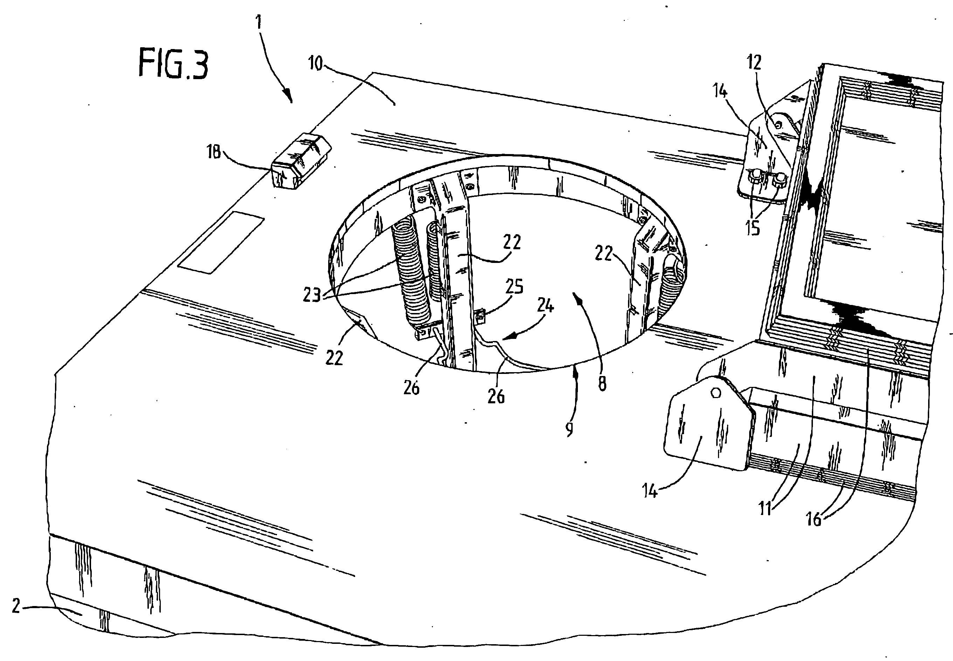

Fig. 3 zeigt einen schrägen perspektivischen Blick auf die Öffnung 9 und teilweise in den Tellerschacht 8 der Vorrichtung 1: Von insgesamt vier Führungsstangen 22 sind zwei ersichtlich und weiterhin sind Federn 23 erkennbar, die sich bei Zugbelastung verlängern. Diese Federn 23 sind oben am Deckel 10 befestigt und mit ihrem unteren Ende an einer Tellerplattform 24, die nachstehend näher erläutert wird.

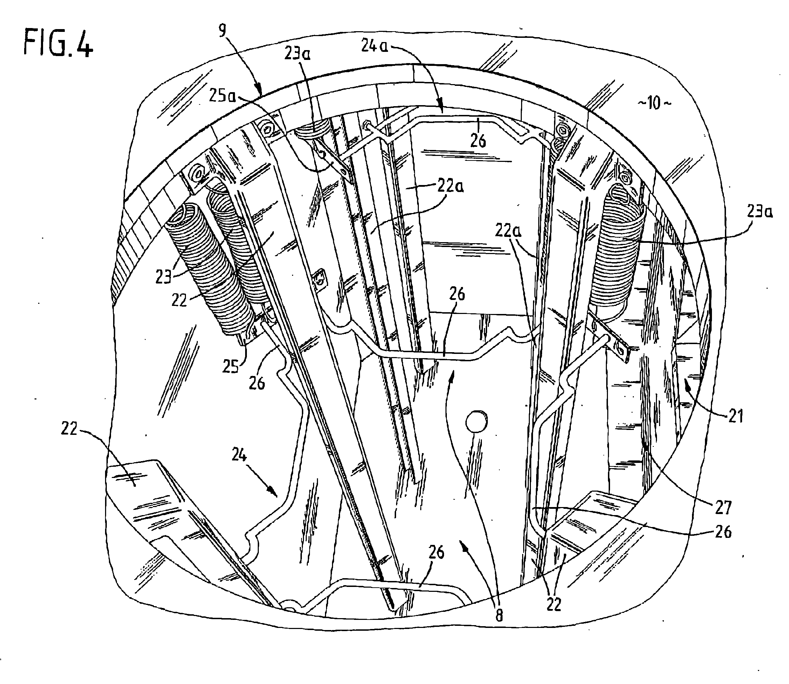

In Fig. 4 sind die vier Führungsstangen 22 des Tellerschachtes 8 erkennbar, durch dessen Öffnung 9 der Blick in den Innenraum der Vorrichtung 1 fällt. Zudem ist in diesem Innenraum ein zweiter Tellerschacht 8 erkennbar sowie dessen Führungsstangen, die zur Unterscheidung von denen des vorderen Tellerschachtes 8 jeweils mit 22a bezeichnet sind. Auch die Federn und die Tellerplattform sind bei dem hinteren Tellerschacht 8 zur Unterscheidung von denen des vorderen Tellerschachtes 8 jeweils mit 23a und mit 24a bezeichnet.

Eine Tellerplattform 24 besteht aus vertikalen Montageplatten 25, an denen sowohl Federn 23 mit ihren unteren Enden eingehängt sind, und an welchen Montageplatten 25 auch Verbindungsbügel 26 befestigt sind, wobei sich jeder Verbindungsbügel 26 zwischen jeweils zwei Montageplatten 25 erstreckt. Die Verbindungsbügel 26 verlaufen derart, dass sie sich durch den lichten Freiraum zwischen den vier Führungsstangen 22 erstrecken, so dass ein Teller, der in den Schacht 8 zwischen die vier Führungsstangen 22 eingebracht wird, notwendigerweise auf den Verbindungsbügeln 26 und damit auf der Tellerplattform 24 aufruht.

Es kann entweder vorgesehen werden, die Teller unmittelbar auf die Tellerplattform 24 aufzustellen, oder auf der Tellerplattform 24 kann noch ein Gitterrost, ein Korb, eine Platte oder eine ähnliche Stütze für zumindest den untersten Teller vorgesehen sein. Mit zunehmender Anzahl von Tellern, die in einen Tellerschacht 8 eingebracht werden, erhöht sich das Gewicht des Tellerstapels, so dass die Federn 23 verlängert werden und sich die Tellerplattform 24 mit dem Tellerstapel unter dem Eigengewicht des Tellerstapels absenkt, so dass auf diese Weise auf den jeweils obersten Teller problemlos noch ein weiterer Teller aufgelegt werden kann, bis das Fassungsvermögen des Tellerschachtes 8 erreicht ist. Wenn ein Teller von dem Tellerstapel entnommen wird und sich dadurch des Gewicht des Tellerstapels reduziert, werden die Federn 23 entlastet und ziehen sich wieder zusammen. Dadurch wird die Tellerplattform 24 angehoben, so dass der jeweils oberste Teller problemlos erfasst werden kann.

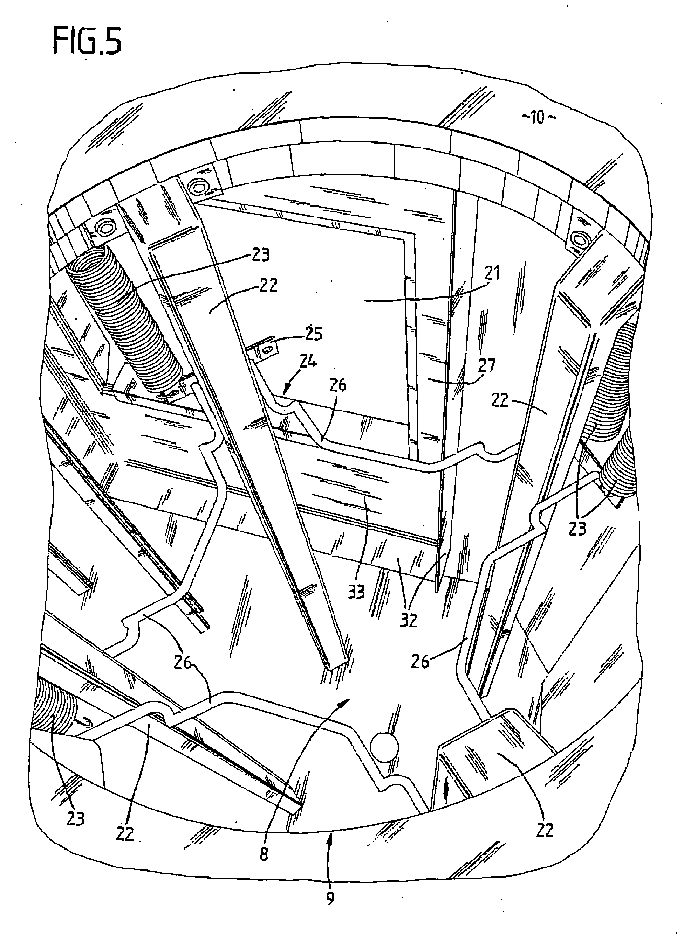

Die Anordnung von vier Führungsstangen 22, vier Montageplatten 25 und jeweils zwei unterschiedlichen Typen von Federn 23 an jeder Montageplatte 25 ergibt die Möglichkeit, die Federrate und damit die Absenkung der Tellerplattform 24 optimal an die Höhe bzw. das Gewicht der jeweils verwendeten Teller anzupassen: Die beiden Federn 23, die jeder Führungsstange 22 bzw. jeder Montageplatte 25 zugeordnet sind, sind mit ihren oberen Enden ortsfest festgelegt, z. B. am Deckel 10, an einem oberen Ausleger der Führungsstange 22, oder an einem ähnlich, fest mit dem Gehäuse 2 verbundenen und unbeweglichen Bauteil. Die unteren Enden der beiden Federn 23 sind wahlweise mit der Montageplatte 25 verbindbar, beispielsweise dadurch, dass ein Ende der Feder 23 in eine Bohrung der Montageplatte 25 eingehängt werden kann, wie dies in Fig. 5 bei der links oben dargestellten Feder 23 ersichtlich ist.

Es ergibt sich bei jeder Montageplatte 25 die Möglichkeit, wahlweise nur die eine oder nur die andere oder beide Federn 23 einzuhängen, also zu "aktivieren", so dass an jeder Montageplatte 25 auf dreifache Weise die wirksame Federrate eingestellt werden kann, die das Absenken der Tellerplattform 24 beeinflusst. Zudem kann eine unterschiedliche "Aktivierung" der Federn 23 an den vier Montageplatten 25 eines Tellerschachtes 8 vorgesehen werden: es kann beispielsweise an zwei gegenüberliegenden Montageplatten 25 jeweils nur eine aktivierte Feder 23 des ersten Typs von Federn 23 vorgesehen sein, und an den beiden anderen sich gegenüberliegenden Montageplatten 25 jeweils beide Federn 23 aktiviert sein oder dort kann der jeweils zweite Federtyp aktiviert sein. Im Ergebnis kann die insgesamt für die Tellerplattform 24 eines Tellerschachtes 8 wirksame Federrate vielfach und in kleinen Schritten eingestellt werden.

Die Fig. 4 und 5 zeigen weiterhin ein Luftleitblech 27, welches an der Innenseite der Seitenwand des Gehäuses 2 vorgesehen ist und welches sich wie ein Rahmen um die Wandöffnung 21 erstreckt.

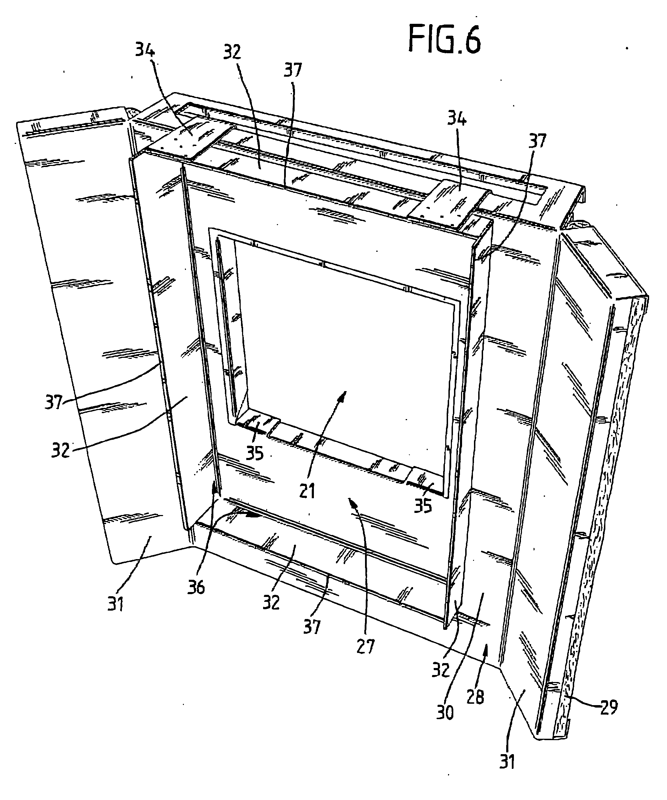

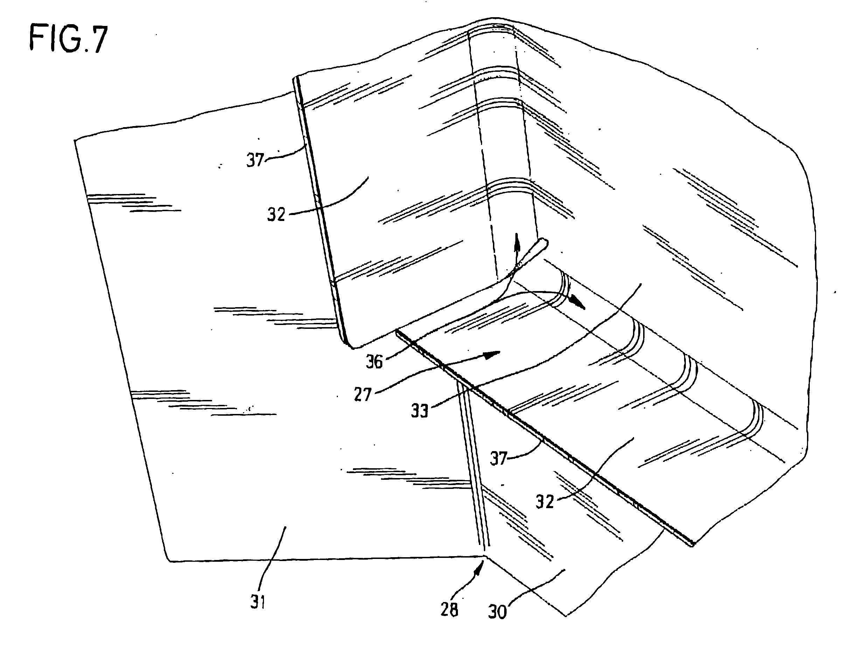

Aus den Fig. 6 und 7 ist die Ausgestaltung dieses Luftleitbleches 27 deutlicher erkennbar: Fig. 6 zeigt ein Seitenwandmodul 28, wobei die Blickrichtung in Fig. 6 von dem Gehäuseinneren auf das Seitenwandmodul 28 gerichtet ist. Ein gleichartiges Seitenwaridmodul 28 ist in Fig. 2 von der Außenseite der Vorrichtung 1 her erkennbar, weil dort ein äußeres Wandelement des Gehäuses 2 entfernt ist. Das Seitenwandmodul 28 weist die bereits beschriebene Wandungsöffnung 21 auf, die als Service- und Montageöffnung dient und die den Einsatz eines später noch genauer beschriebenen Radial-Heißluftgebläses ermöglicht.

Das Seitenwandmodul 28 ist zur Außenseite hin, also zu dem von außen sichtbaren Gehäuse 2 der Vorrichtung 1, durch eine Isolierung 29 aus Mineralwolle thermisch isoliert. Die zum Innenraum gerichtete, aus Blech bestehende Wandung des Seitenwandmoduls 28 ist triptychonartig abgewinkelt, mit einem Mittelteil 30 und zwei Seitenflügeln 31, die gegenüber dem Mittelteil 30 abgewinkelt sind. Die Seitenflügel 31 dienen üblicherweise dazu, den Luftstrom des bereits erwähnten Radial-HeißluftGebläses abzulenken und seitlich neben die Tellerschächte 8 zu leiten. Bei dem dargestellten Ausführungsbeispiel ist diese an sich bekannte und übliche Ausgestaltung des Seitenwandmoduls 28 durch die nachträgliche Anbringung des Luftleitbleches 27 verändert worden:
Die vom Radialgebläse ausströmende Heißluft gelangt nicht bis zu den Seitenflügeln 31, sondern wird vorher durch vier Randstreifen 32 des Luftleitbleches 27 umgelenkt und in den Innenraum der Vorrichtung 1 geleitet.

Das Seitenwandmodul 28 ohne das Luftleitblech 27 stellt in seiner Ausgestaltung den aus der Praxis bekannten Stand der Technik dar. Die Randstreifen 32 des Luftleitblechs 27 schließen, wie insbesondere auch aus Fig. 7 ersichtlich ist, sanft gerundet an einen zentralen Teil 33 des Luftleitbleches 27 an, im Gegensatz zu der vergleichsweise scharfwinkligen Abwinkelung der Seitenflügel 31 gegenüber dem Mittelteil 30 des Seitenwandmoduls 28. Randstreifen 32 des Luftleitblechs 27 schließen, wie insbesondere auch aus Fig. 7 ersichtlich ist, sowohl oben als auch unten sowie an beiden Seiten an den zentralen Teil 33 des Luftleitbleches 27 an, im Gegensatz zu den vorgesehenen Seitenflügeln 31 des Seitenwandmoduls 28, die lediglich seitlich an das Mittelteil 30 anschließen. Das Gebläse fördert die Luft radial nach allen Seiten, so dass mit Hilfe des Luftleitblechs 27 nicht nur die seitlich aus dem Gebläse austretende Luft abgelenkt wird, sondern auch die nach oben und nach unten aus dem Gebläse austretende Luft. So wird eine Konzentration der Heizleistung auf die Tellerschächte 8 und die darin befindlichen Teller bewirkt, und von der Vorrichtung 1 nach außen abgegebene Wärmemengen, die für das Aufheizen der Teller eine Verlustwärme darstellen, werden z. B. durch einen kühler gehaltenen Bodenbereich der Vorrichtung 1 reduziert, so dass eine zweifache Effizienzsteigerung bewirkt wird.

Das Luftleitblech 27 ist durch obere Laschen 34 mit dem Seitenwandmodul 28 verbunden, wobei diese oberen Laschen 34 an den oberen Randstreifen 32 angeschweißt sind. Vom zentralen Teil 33 erstrecken sich zwei zentrale Laschen 35 ebenfalls zum Seitenwandmodul 28 und greifen in die Wandöffnung 21, so dass mittels dieser Laschen 34 und 35 das Luftleitblech 27 an dem Seitenwandmodul 28 festgelegt ist.

Die dargestellte Ausgestaltung des Luftleitbleches 27 ermöglicht die Nachrüstung einer bestehenden Vorrichtung 1, welche ein herkömmliches Seitenwandmodul 28 aufweist, mit der vorteilhaften Luftführung gemäß der vorliegenden Neuerung. Abweichend von dem dargestellten Ausführungsbeispiel kann bei einer Neukonstruktion einer Vorrichtung 1 oder bei einer Neukonstruktion eines Seitenwandmoduls die zum Innenraum gerichtete Ausgestaltung der Seitenwände abweichend von dem dargestellten Seitenwandmodul 28 erfolgen, so dass dementsprechend neu konstruierte Seitenwandmodule von vomherein eine Neuerungsgemäße Führung der Luft ermöglichen, ohne die Notwendigkeit, zusätzlich zum Seitenwandmodul noch Luftleitbleche anzuordnen.

Während der sanft gebogene Übergang zwischen dem zentralen Teil 33 und den Randstreifen 32 in den Fig. 6 und 7 durch Pfeile 36 angedeutet ist, enden die Randstreifen 32 scharfkantig, nämlich durch eine abgeschnittene Kante 37, so dass sie eine regelrechte Abreißkante für die umgelenkte Luftströmung bilden. Diese Kante 37 ermöglicht auch bei vergleichsweise geringen Luftgeschwindigkeiten eine strömungsgünstige, verwirbelungsarme Ablösung der Luftströmung von dem Luftleitblech 27, ohne unerwünscht große Anteile des Luftstromes von seiner vorgegebenen, auf die Tellerschächte 8 gerichteten Richtung abzulenken und zu verwirbeln.

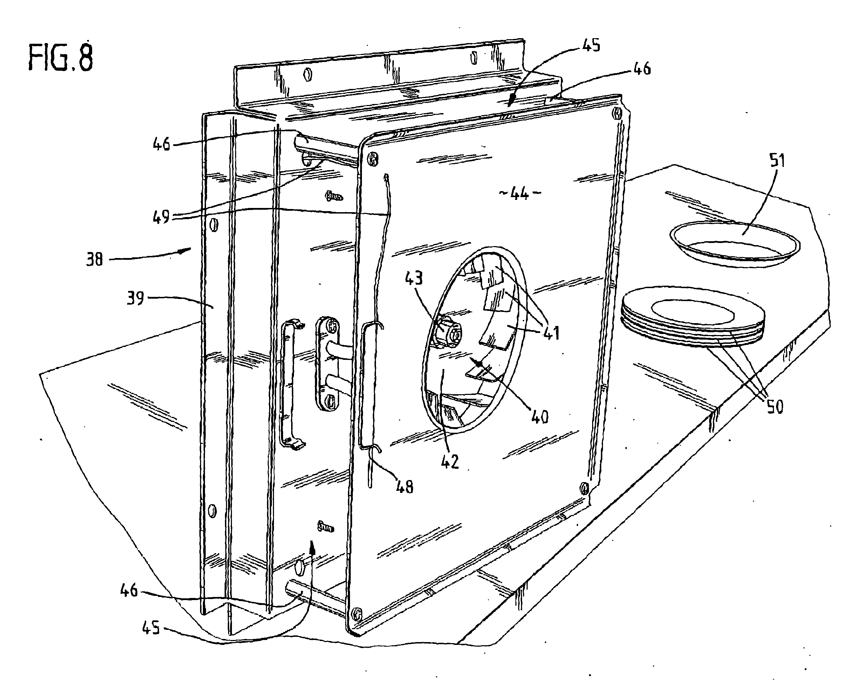

Fig. 8 zeigt ein Radial-Heißluftgebläse 38 der Vorrichtung 1. Es weist eine Grundplatte 39 zur Befestigung am Seitenwandmodul 28 auf. Flügel 41 des Gebläses 38 sind auf einem Flügelteller 42 montiert, der um eine Achse 43 drehbar ist, wobei die Flügel 41 die zentral angesaugte Luft radial nach außen blasen. Hierzu weist das Gebläse 38 zwischen seiner Grundplatte 39 und einer zum Innenraum des Gehäuses 2 hin angeordneten Abdeckplatte 44 radial umlaufende Austrittsschlitze 45 auf. Der Abstand zwischen der Abdeckplatte 44 und der Grundplatte 39 wird durch Distanzbolzen 46 eingestellt.

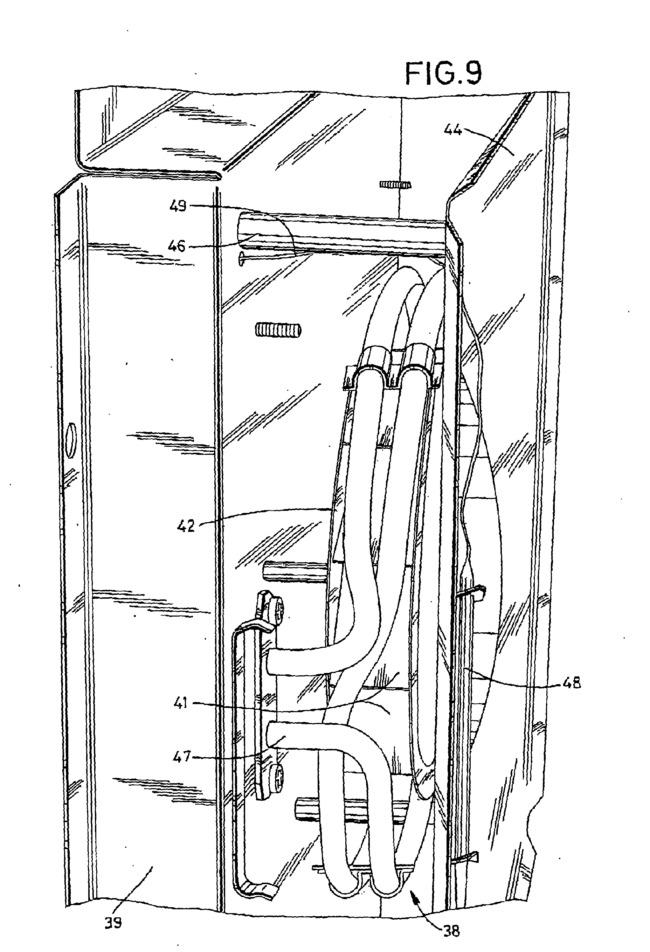

Das Gebläse 38 weist weiterhin eine Heizvorrichtung in Form eines Widerstandsdrahtes 47 auf, wobei insbesondere aus Fig. 9 ersichtlich ist, dass dieser Widerstandsdraht 47 radial um den Flügelteller 42 und die Flügel 41 des Gebläses 38 herum verläuft.

Aus den Fig. 8 und 9 ist weiterhin ein Thermosensor 48 erkennbar, von dem aus ein Sensorkabel 49 zu einer aus Übersichtlichkeitsgründen nicht dargestellten und an sich bekannten Steuerung verläuft, so dass beispielsweise bei Erreichen einer gewünschten Innentemperatur in der Vorrichtung 1 das Gebläse 38 abgeschaltet werden kann oder mittels einer an sich bekannten Thermostat-Steuerung die Temperatur innerhalb der Vorrichtung 1 auf einem gewünschten Temperaturniveau gehalten werden kann, indem die Heizleistung intervallweise aktiviert wird oder nach dem Aufheizen auf ein konstantes Maß reduziert wird, wenn die gewünschte Temperatur im Inneren der Vorrichtung 1 erreicht worden ist.

In Fig. 8 ist neben dem Gebläse 38 auch ein Stapel von mehreren Tellern 50 erkennbar, wobei es sich hier um keramische Teller handelt, die unmittelbar zur Aufnahme von Speisen dienen. Weiterhin ist neben diesem Stapel von Tellern 50 ein Warmhalteteller 51 ersichtlich, der aus Metall besteht und einen Wachskem enthält und der nicht unmittelbar zur Aufnahme der Speisen dient, sondern vielmehr zur Aufnahme eines keramischen Tellers 50, der durch den Warmhalteteller 51 über längere Zeit warm gehalten werden kann. Sowohl die keramischen Teller 50 als auch die Warmhalteteller 51 werden im Rahmen der vorliegenden Neuerung zusammenfassend als Teller bezeichnet. Aufgrund ihrer ähnlichen Abmessungen können sie in der Vorrichtung 1 gestapelt und beheizt werden und insbesondere in den Tellerschächten 8 aufgenommen werden.

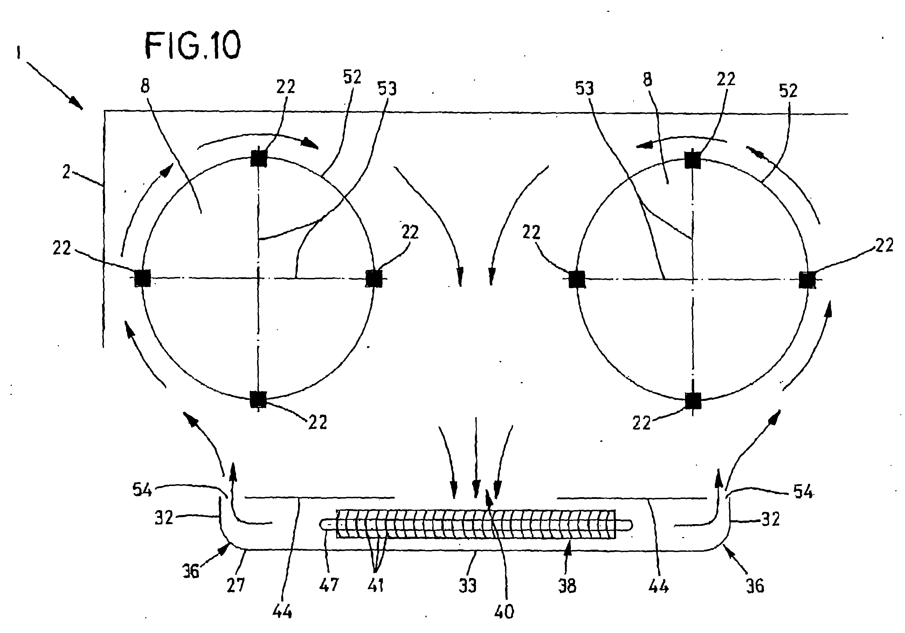

Fig. 10 zeigt rein schematisch, wobei eine Vielzahl von Teilen in der Zeichnung weggelassen ist, einen Horizontalschnitt durch den Innenraum der Vorrichtung 1: Mit Kreisen 52 sind die Tellerschächte 8 angedeutet, wobei der Kreisdurchmesser nicht dem Durchmesser der aufzunehmenden Teller entspricht, sondern es handelt sich um einen idealisierten Kreis, wobei auf dieser Kreislinie die vier Führungsstangen 22 angeordnet sind. Bei dem dargestellten Ausführungsbeispiel sind die beiden Kreise 52 unterschiedlich groß, in Anpassung an unterschiedliche Tellerdurchmesser, wobei in Abweichung von diesem Ausführungsbeispiel jedoch auch beide Kreise 52 gleich groß sein können. Die Verbindungslinien zwischen zwei jeweils gegenüberliegenden Führungsstangen 22 sind strichpunktiert dargestellt sowie mit 53 bezeichnet. Sie kennzeichnen an ihrem Kreuzungspunkt den Mittelpunkt des jeweiligen Kreises 52.

Das Radial-Heißluftgebläse 38 ist auf der zum Innenraum gerichteten Seite des Luftleitbleches 27 angeordnet, wobei die Flügel 41 und der Widerstandsdraht 47 schematisch angedeutet sind. Zum Innenraum hin ist eine Abdeckplatte 44 vorgesehen, die eine zentrale Luftansaugöffnung 40 freilässt, wobei die in das Gebläse 38 eintretende Luft durch drei Luftpfeile angedeutet ist. Die vom Gebläse 38 radial nach außen geblasene Luft wird durch das Luftleitblech 27 in den Innenraum der Vorrichtung 1 umgelenkt, sie tritt dabei durch einen Spalt 54 aus, welcher sich zwischen den Randstreifen 32 und der Abdeckplatte 44 ergibt.

Dabei ist die Anordnung des Spaltes 54 so gewählt, dass die Luft nicht mittig auf die Teller bzw. auf die Tellerschächte 8 gerichtet ist, sondern geringfügig außermittig, zum Rand hin auf diese Tellerschächte 8 trifft. Auf diese Weise wird zunächst ein direktes Auftreffen der aufgeheizten Luft auf die Teller sichergestellt, wobei jedoch gleichzeitig durch die außermittige Luftführung bewirkt wird, dass die Luft außen um die Teller bzw. die Tellerschächte 8 herum strömt, wie dies durch die verschiedenen Luftströmungspfeile in Fig. 10 angedeutet ist. Durch diese Luftführung wird eine möglichst große Kontaktfläche zwischen Heißluft und den Tellern bewirkt.

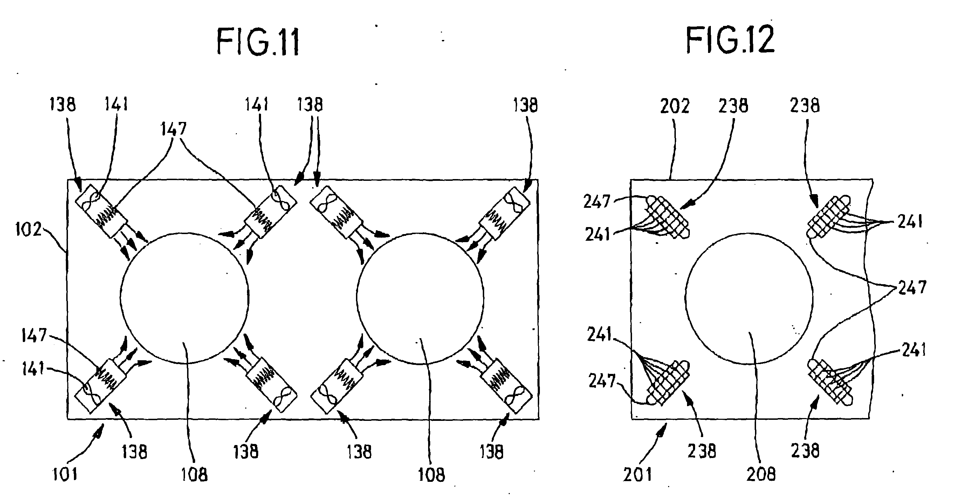

Abweichend von dem in den Fig. 1 bis 10 dargestellten Ausführungsbeispiel kann eine Anordnung des Heißluftgebläses auch in den diagonalen Ecken des Gehäuses 2 vorgesehen sein: Fig. 11 zeigt einen schematischen Einblick in Form eines Horizontalschnittes in ein Gehäuse 102 einer Vorrichtung 101. Zwei Tellerschächte 108 sind ebenfalls schematisch durch Kreislinien angedeutet, ähnlich wie in Fig. 10, wobei zur Beheizung Heißluftgebläse 138 vorgesehen sind. Es handelt sich dabei um Axialgebläse, wobei die propellerartigen Flügel schematisch dargestellt und mit 141 bezeichnet sind. Ein Widerstandsdraht 141 ist schematisch in Form einer Zickzacklinie angedeutet und symbolisiert eine Heizung für die vom Gebläse geförderte Luft.

Während in Fig. 11 rein beispielhaft acht Gebläse138 vorgesehen sind, können abweichend von diesem zweiten Ausführungsbeispiel auch weniger Gebläse innerhalb einer Vorrichtung vorgesehen sein. Das Ausführungsbeispiel der Fig. 11 erläutert lediglich, dass durch die Neuerungsgemäße Überlegung, die Tellerschächte und die darin gestapelten Teller direkt anzublasen, auch die Verwendung von Axialgebläsen möglich ist, da diese in den vergleichsweise großvolumigen leeren Eckräumen des Gehäuses 102 untergebracht werden können und ausreichend Platz zum Ansaugen der Luft an der Rückseite der Gebläse 138 verbleibt.

Fig. 12 zeigt ausschnittsweise und ansonsten in einer Darstellung ähnlich Fig. 11 ein drittes Ausführungsbeispiel, wobei die gesamte Vorrichtung mit 201 bezeichnet ist, das Gehäuse mit 202, ein Tellerschacht mit 208 und mehrere Heißluftgebläse mit 238. Es handelt sich dabei wie beim ersten Ausführungsbeispiel um Radial-Heißluftgebläse mit Flügeln 241 und einem schematisch angedeuteten, um die Flügel 241 umlaufend angeordneten Widerstandsdraht 247 als Heizung. Auch bei dieser rein schematisch dargestellten Ausgestaltung der Vorrichtung 201 wird deutlich, dass durch die Neuerungsgemäß vorgesehene direkte Führung der Heißluft auf den Tellerschacht 208 bzw. auf die darin gestapelten Teller, eine Anordnung der Gebläse möglich ist, die bislang nicht verwirklicht werden konnte, da bislang die Luftführung bewusst an den Tellerschächten vorbei erfolgen sollte.

Bei den Ausführungsbeispielen der Fig. 11 und 12 kann wie bereits beschrieben, abweichend von der dargestellten Ausgestaltung, auch die Anordnung lediglich eines oder weniger Gebläse vorgesehen sein, und nicht notwendigerweise die Anordnung von vier Gebläsen pro Tellerschacht 108 bzw. 208. Weiterhin kann bei Anordnung mehrerer Gebläse pro Tellerschacht eine Bauform der Gebläse gewählt werden, die erheblich kleiner ist als das Gebläse 38 des ersten Ausführungsbeispieles der Fig. 1 bis 10. Insbesondere kann die getrennte Ausführung von Heizung und Gebläse vorgesehen sein, sodass z. B. ein Heißluftgebläse vorgesehen ist sowie ein Zusatzgebläse, welches - möglicherweise ohne Heizungswirkung - lediglich für eine Ausrichtung des Luftstroms direkt auf den Tellerschacht sorgt.

## Patentansprüche

1. Vorrichtung zum Erwärmen von Tellern, mit einem Gehäuse,
und mit wenigstens einem Tellerschacht zur Aufnahme von Tellern,
und mit einem Heißluftgebläse, welches Heißluft im Gehäuse verteilt, um die Teller zu beheizen,
**dadurch gekennzeichnet,**
**dass** die Heißluft direkt auf den Tellerschacht (8, 108, 208) gerichtet ist.

2. Vorrichtung nach Anspruch 1, **dadurch gekennzeichnet,**
**dass** das Gebläse (138, 238) auf den Tellerschacht (108, 208) blasend ausgerichtet ist.

3. Vorrichtung nach Anspruch 1, **dadurch gekennzeichnet,**
**dass** wenigstens ein Luftleitblech (27) vorgesehen ist, welches den Luftstrom vom Gebläse (38) auf den Tellerschacht (8) umlenkt.

4. Vorrichtung nach Anspruch 3, **dadurch gekennzeichnet,**
**dass** das Luftleitblech (27) dort wo es die Richtung des Luftstroms ändert, in einer Kurve verläuft.

5. Vorrichtung nach Anspruch 3, **dadurch gekennzeichnet,**
**dass** das Luftleitblech (27) dort wo es aufhört, den Luftstrom zu führen, dem Luftstrom mit einer scharfen Kante anliegt.

6. Vorrichtung nach Anspruch 1, **dadurch gekennzeichnet,**
**dass** das Gebläse (38, 238) als Radialgebläse ausgestaltet ist.

7. Vorrichtung nach Anspruch 1, **dadurch gekennzeichnet,**
**dass** das Gebläse (138) als Axialgebläse ausgestaltet ist.

8. Vorrichtung nach Anspruch 1, **dadurch gekennzeichnet,**
**dass** die Heißluft außermittig auf den Tellerschacht (8) gerichtet ist.

9. Vorrichtung nach Anspruch 1, **dadurch gekennzeichnet,**
**dass** mehrere Heißluftgebläse (138, 238) vorgesehen sind.
